# EUROPEAN PATENT APPLICATION

(11) **EP 2 264 853 A2**
(43) Date of publication of application: **22.12.2010**
(21) Application number: 09015416.2
(22) Date of filing: 14.12.2009
(51) Int. Cl.: H02J 7/00

(54) **Portable phone holder and charger with quick release feature**

(30) Priority: 15.06.2009 US 484965; 27.10.2009 US 606505
(71) Applicant: Teleway Industrial Ltd., Ma Jia Long Industrial Area Nanshan District, Shenzhen Guangdong 518052 (CN)
(72) Inventor: Tan, Qing Song, Shenzhen, 518052 Guangdong Province (CN)
(74) Representative: Duffy, Assumpta Dympna

(57) **Abstract**

A portable electronic device holder and charger with quick release feature (100, 202) for holding and charging a portable electronic device (130), such as a cellular phone. The portable electronic device holder and charger with quick release feature (100, 202) includes a cradle portion (102, 206) with electrical contacts (132, 204) adapted to contact with electrical recharging contacts (196) on a portable electronic device (130) engaged therewith, a battery holding base portion (104, 207), and a hinge (106, 210) that pivotally and releasably electrically connects together the cradle portion (102, 206) and the battery holding base portion (104, 207).

## Description

### BACKGROUND OF THE INVENTION

This invention is related chargers for portable devices, and more particularly a portable phone holder and charger with a quick release feature.

### BRIEF SUMMARY OF THE INVENTION

In recent years, hundreds of millions of portable or mobile telephone handsets, aka cellular phones, have been produced and are in use around the world. A consistent problem with cellular phones, particularly those that are rich in features, such as internet browsers, video capabilities, texting, music playback and other features is that they use a considerable amount of electrical power, and batteries tend to run down quickly.

While battery chargers are used to recharge cellular phones at electrical outlet plugs and from accessory power plugs in vehicles, many times a cellular phone user does not have access to these sources to recharge their cellular phone batteries. There are numerous types of back up batteries for cellular phones and other portable electronic devices that can be connected to the cellular phone or other portable electronic device to provide up a back up power supply. However, many of these chargers are bulky and impede usage of the cellular phone while the cellular phone is connected to the charger, and there accordingly remains a need for an improved cellular phone holder and charger.

The invention provides an improved portable phone holder and charger with a quick release feature for holding and charging portable electronic devices such as cellular phone, PDAs, and the like. It includes a battery holding base portion, a cellular phone cradle portion, and a hinge with a quick release feature that can be operated quickly and reliably, preferably with one hand. The hinge hingeably detachably connects together the battery holding base portion and the cellular phone cradle portion. The cellular phone cradle portion optionally has an electrical engagement which is adapted to electrically connect to a cellular phone engaged therewith. In embodiments where a power port is not positioned on a bottom of the cellular phone but recharging electrical contacts are provided on the back or on sides of the cellular phone, power will be routed from the battery holding base portion to electrical contacts, on e.g., on the inside of the back of the cradle portion or on sides of the cradle portion. The cellular phone holder and charger is adapted to move between a closed position, wherein the cellular phone cradle portion is brought into close proximity with the bottom surface of the battery holding base portion to protect the electrical engagement and reduce the size of the unit, and a full opened position, wherein the cellular phone cradle portion is tilted back over the battery holding base portion so that when the battery holding base portion is positioned on a horizontal surface the cellular phone in the cellular phone cradle portion will be tiled back over the battery holding base portion so that its screen can be viewed and features of the phone can be accessed. The cellular phone holder and charger can also be sit up on a horizontal surface by setting the cellular phone cradle portion and the battery holding base portion on a side edge so a cellular phone's screen therein will be in a landscape orientation. Circuitry in the cellular phone holder and charger of the invention is adapted so that if a cellular phone engaged thereto is in need of charging, power from a battery in the cellular phone holder and charger or external power supplied thereto will charge the cellular phone battery. The cellular phone holder and charger itself is connectable to an external power supply so that the battery therein can be charged.

The detachability of the battery holding base portion and the cellular phone cradle portion provides users with much additional utility. Oftentimes, different models of portable electronic devices have different dimensions and layouts, but may use the same recharger voltage, amperage, and power plug. For examples, phones may vary in their width, thickness, height, contours and curvatures, and layout of buttons and jacks, and the like. Rather than needing to provide a large number of different phone holder that are each adapted to hold a particular model of phone (or other portable electronic device) with a certain dimension and layout of keys and button, the present invention permits a common charger battery holding base portion to be detachably engaged with a variety of a cellular phone cradle portions that are sized and shaped to fit a particular phone. This will save on manufacturing costs since a lesser number of the most costly different base portions (e.g., one) that contain the battery and electronics will be need to be made and, for example, a set of different phone cradle portions can be provided that are adapted, for example, to fit a line of cellular phones. Moreover, the detachability will allow a user to carry more than one battery holding base portion, and if the battery becomes depleted in one battery holding base portion, the user can quickly swap it out with another charged up battery holding base portion for extra battery life.

### BRIEF DESCRIPTION OF THE DRAWINGS

FIG. 1 is a perspective view showing a first exemplary embodiment of the portable phone holder and charger of the invention in a partially opened orientation.

FIG. 2 is a perspective view the first exemplary portable phone holder and charger of FIG. 1 in its fully opened orientation holding an exemplary cellular phone.

FIG. 3 is a side view showing the portable phone holder and charger in two of several orientations.

FIG. 4 is a front view showing the portable phone holder and charger in its closed orientation.

FIG. 5 is a back view showing the portable phone holder and charger in its closed orientation.

FIG. 6 is a block view showing various functional elements of circuitry of the portable phone holder and charger of the invention.

FIG. 7 is a front right perspective view of an exemplary embodiment of a portable phone holder and charger with quick release feature in its opened position.

FIG. 8 is a front right perspective view of the portable phone holder and charger with quick release feature of FIG. 7 holding an exemplary cellular phone.

FIG. 9 is a front view showing the exemplary embodiment of the portable phone holder and charger with quick release feature of the invention in its fully closed orientation.

FIG. 10 is a back view of the first exemplary embodiment of the portable phone holder and charger with quick release feature of the invention in its fully closed orientation.

FIG. 11 is a side view of the first exemplary embodiment of the portable phone holder and charger with quick release feature of the invention in its fully closed orientation.

FIG. 12 is an exposed view of the portable phone holder and charger with quick release feature along view lines 12-12 of FIG. 11.

FIG. 13 is a top plan view of the battery holding base portion of the portable phone holder and charger with quick release feature.

FIG. 14 is a side view of the battery holding base portion.

FIG. 15 is an exposed view of the battery holding base portion along view lines 15-15 of FIG. 14.

FIG. 16 bottom plan view of the battery holding base portion.

FIG. 17 is a top view showing the cellular phone cradle portion of the portable phone holder and charger with quick release feature with an exemplary cellular phone cradled therein.

FIG. 18 is a side view of the cellular phone cradle portion.

FIG. 19 is a partially exposed front view of the cellular phone cradle portion holding an exemplary cellular phone along view lines 19-19 of FIG. 18.

FIG. 20 is a partially exposed rear view of the cellular phone cradle portion holding an exemplary cellular phone.

FIG. 21 is an exemplary alternate embodiment of an exemplary embodiment of a portable phone holder and charger with quick release feature in its opened position with recharging contacts on its back.

FIG. 22 is a block view showing various functional elements of circuitry of the portable phone holder and charger with quick release feature of the invention.

### DETAILED DESCRIPTION OF THE INVENTION

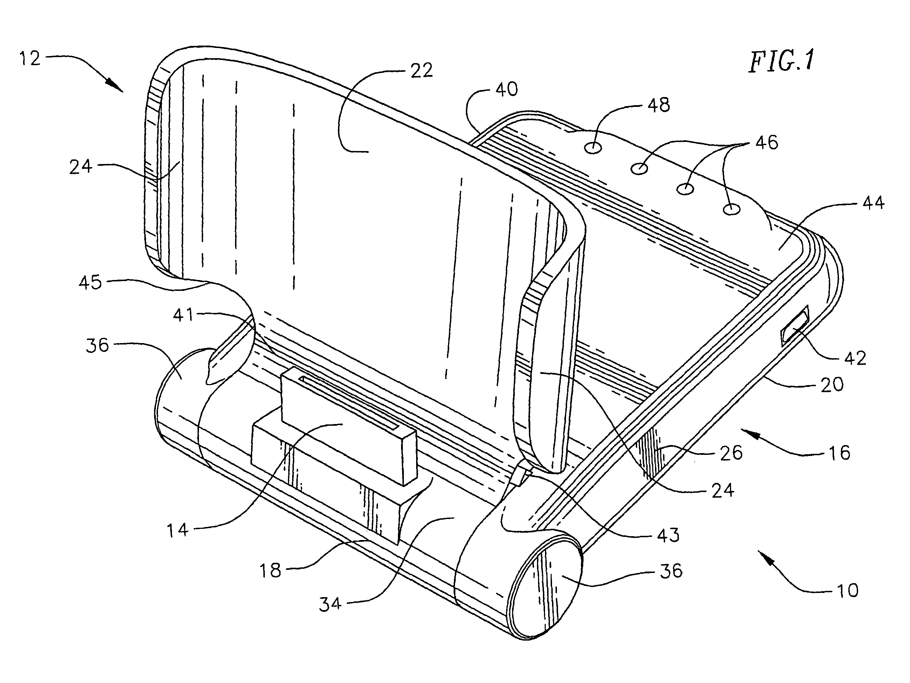

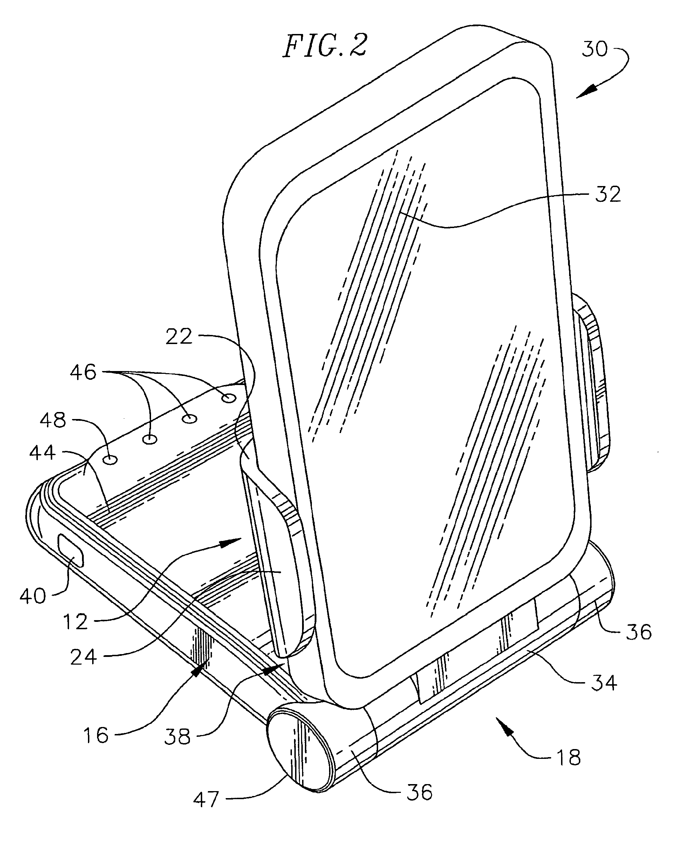

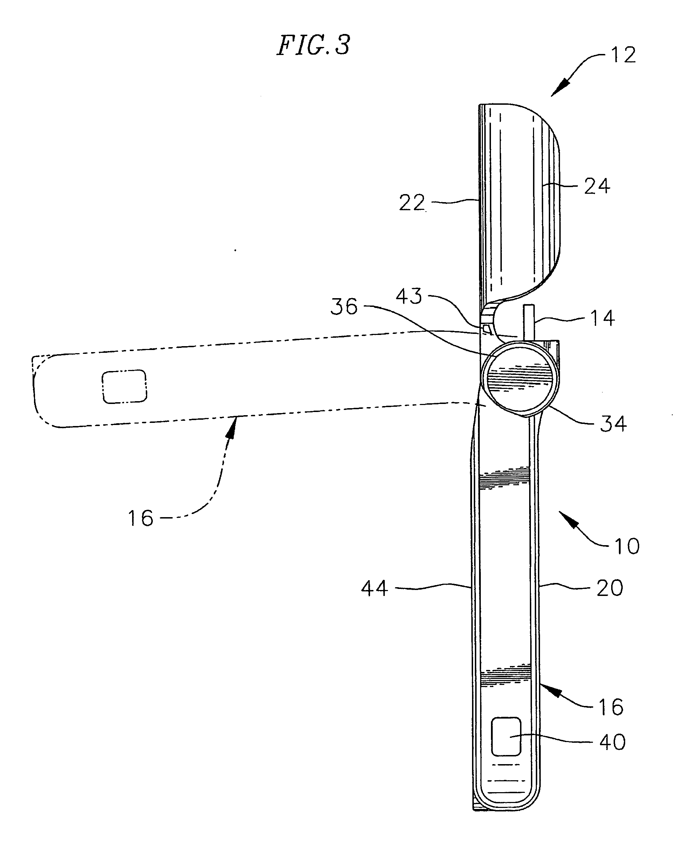

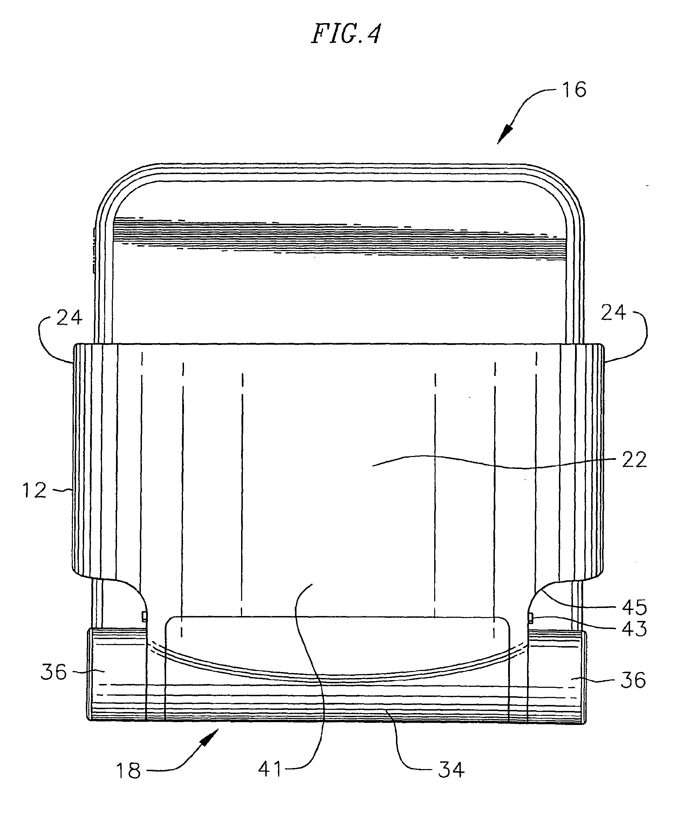

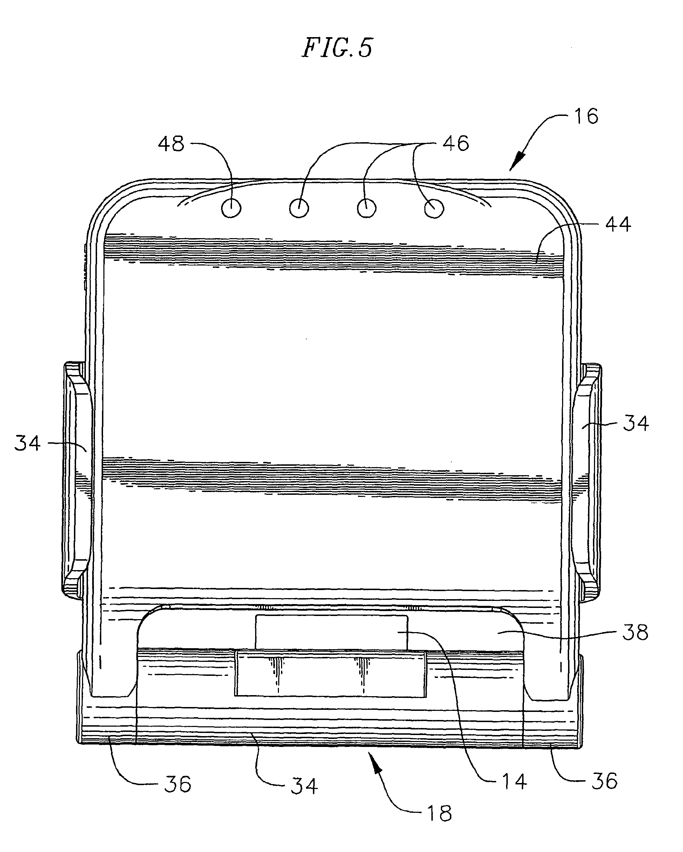

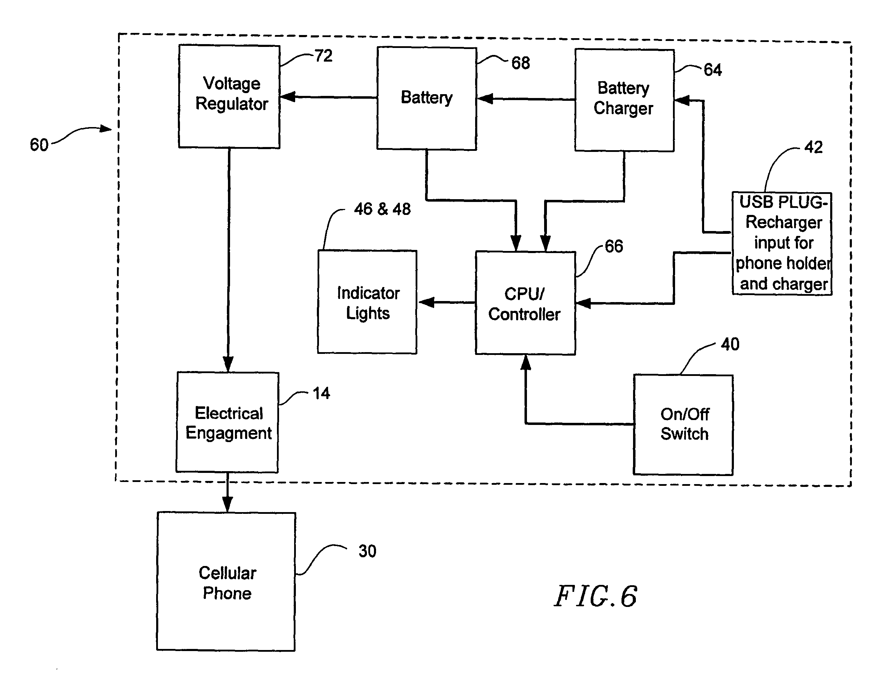

FIG. 1 is a perspective view showing an exemplary embodiment of the portable phone holder and charger 10 of the invention in a partially opened orientation. It includes a cellular phone cradle portion 12 and an electrical engagement 14, such as electrical jack, which is adapted to electrically connect to a cellular phone or other portable electronic device to be engaged therewith. In cases where the portable phone holder and charger 10 is for with devices such as the Apple^{®} brand iPOD^{®} or iTouch^{®} portable phones and MP3 and MP4 players, a 30- pin type of connector jack can be provided. However, the electrical engagement will be selected based on the device to engaged with the portable phone holder and charger 10 of the invention. A battery holding base portion 16 is further provided. The battery holding base portion 16 holds a battery and circuitry (shown in FIG. 6), which powers up and recharges the portable electronic device connected thereto. A hinge 18 pivotally connects together the battery holding base portion 16 and the cellular phone cradle portion 12 together, and allows these portions to be moved relative to each other between a closed position, as best shown in FIGS. 4 and 5, wherein a back support 22 of the cellular phone cradle portion 12 is brought into close proximity with a bottom face 20 of the battery holding base portion 16 to protect the electrical engagement 14 and reduce the size of the unit, and a full opened position as shown in FIG. 2. The battery holding base portion 16 has side edges 26. Extending from the back support 22 of the cellular phone cradle portion 12 are side projections 24. These side projections 24 are sized and shaped to guide in and securely hold the cellular phone to be cradled in the cellular phone cradle portion 12 and thereby help ensure that the electrical engagement 14 is properly aligned to engaged with a complementary socket in the cellular phone. The side projections 24 can preferably be curved inwardly towards each other to frictionally fit along sides of the cellular phone. The hinge 18 can conveniently comprise the cellular phone cradle portion 12 having a generally cylindrical portion 34 that is located at a lower end of the front face 22. The electrical engagement 14 extends upwardly from the generally cylindrical portion 34. The battery holding base portion 16 has two spaced apart retention ends 36 which pivotally receive the generally cylindrical portion 34 therebetween, with the generally cylindrical portion 34 and the retention ends 36 comprising the hinge 18. The hinge 18 can preferably include click stop means that will permit the phone cradle portion 12 and the battery holding base portion 16 to be moved between different degrees of pivot with respect to each other, as best shown in FIG. 3. Such click stop means can be provided by spring loading the hinge with a plurality of stop positions (two of which are shown in FIG. 3), wherein a slight force is required to move the cradle portion 12 and the battery holding base portion 16 out of stop positions. The two spaced apart retention ends 36 extend outwardly from the battery holding base portion 16 and leave a space 38 therebetween. When the cellular phone cradle portion 12 is pivoted with respect to the battery holding base portion 16, the electrical engagement 14 moves with the cellular phone cradle portion 12. The space 38 is adapted to allow the electrical engagement 14 to move into the space 38 when the cellular phone cradle portion 12 and the battery holding base portion 16 are brought into their closed orientation, as shown in FIGS. 4 and 5. This protects the electrical engagement 14 from possible damage. The cradle portion 12 has a neck region 41 that merges into the generally cylindrical portion 34. Stop protrusions 43 extends from inside edges 45 of the neck region 41. The electrical engagement 14 is electrically connected to the battery holding base portion 16 through the hinge 18, e.g., by wiring (not shown) passing through the hinge 18. An on/off switch 40 and a power in jack 42 can be positioned (e.g., on side edges 26) of the battery holding base portion 16.

FIG. 2 is a perspective view the exemplary portable phone holder and charger 10 of FIG. 1 in its fully opened orientation holding an exemplary cellular phone 30. In this position, the cellular phone cradle portion 12 is tilted back over the battery holding base portion 16 so that when the battery holding base portion 16 is positioned on a horizontal surface the cellular phone cradle portion 12 will be tiled back over a top face 44 of the battery holding base portion 16 and hold a cellular phone 30 in that position so that its screen 32 and controls can be viewed and accessed even when it is docked with the battery holding base portion 16. In this orientation, the stop protrusions 43 will impinge on inside edges of the space 38 preventing the cradle portion 12 from being pushed back further over the battery holding base portion 10, and the cradle portion 12 will extend over a top surface 44 of the battery holding base portion 16 which faces up when the device is placed on a flat surface. In lieu of having the stop protrusions 43 on the inside edges 45 of the neck region 41 of the cradle portion 12, the stop protrusions 43 could be placed on inside edges of the space 38. Or, the hinge can be designed to limit the backward tilt of the cradle portion 12 relative to the battery holding base portion 16. The on/off switch 40 and hinge 18 with its generally cylindrical portion 34 and two spaced apart retention ends 36 is shown. The hinge 18 can have a lower face 47 that extends lower than the bottom face 20 of the battery holding base portion 16, so that when the portable phone holder and charger 10 is positioned on a flat horizontal surface, the battery holding base portion 16 will rest on the lower face 45 of the hinge 18 and a front lower edge of the bottom face 20 of the battery holding base portion 16. This will provide both stability and ease of moving the portable phone holder and charger 10 on the flat horizontal surface. Alternately, the portable phone holder and charger 10 can be set up with an edge 26 of the battery holding base portion 16 and a side projection 24 of the cradle portion 12 sitting on a horizontal surface so that the cellular phone's screen will be oriented in a landscape orientation (not shown). Regardless of how the portable phone holder and charger 10 and cellular phone 30 held therein are positioned, the cellular phone will be securely held and its features will be accessible.

FIG. 3 is a side view showing the portable phone holder and charger 10 in an orientation wherein the cellular phone cradle portion 12 and the battery holding base portion 16 are generally located along a vertical plane. In this orientation, a user can fully use the cellular phone and hold it against his/her ear, etc., with the battery holding base portion 16 extending below a plane of the cellular phone. In some other prior art cellular chargers, the weight or force of a battery connected to an recharge socket at a bottom of a cellular phone can exert a pulling force on a recharge socket on the lower end of the cellular phone, which force may possibly damage the delicate recharge socket and/or cause the accessory battery to pull free. In contrast, in the portable phone holder and charger 10 of the invention, the electrical engagement 14 is securely attached above the generally cylindrical portion 34 of the hinge 18 and the battery and electrical circuitry contained in the battery holding base portion 16 are connected through the hinge. This provides a very secure interconnection between a user's portable phone, which will be securely engaged with the cellular phone cradle portion 12 and be seated atop on the electrical engagement 14 (so that there is no excess force applied through the connection between the electrical engagement 14 of the device 10 and the cellular phone 30), with the battery and electrical circuitry contained in the battery holding base portion 16 connected thereto through the hinge 18. One other orientation (e.g., click stop position) is illustrated with the battery holding base portion 16 shown in phantom lines.

FIG. 4 is a front view showing the portable phone holder and charger 10 in its closed orientation wherein a bottom face 20 of the battery holding base portion 16 is brought in close proximity to the back support 22 of the cellular phone cradle portion 12. The side projections 24 of the cellular phone cradle portion 12 will snap along sides of the battery holding base portion 16. The hinge 18 with its generally cylindrical portion 34 and two spaced apart retention ends 36 is shown.

FIG. 5 is a back view showing the portable phone holder and charger 10 in its closed orientation. Battery state indicator lights 46 (to indicate the charge level of the battery in the portable phone holder and charger 10) can be provided on the top surface 44 of the battery holding base portion 16. In addition, a recharge indicator light 48 can be included (e.g., in a different color than the color of the battery state indicator light 46) to indicate to a user that a connected cellular phone is being recharged. The side projections 24 of the cellular phone cradle portion 12 will slide along sides of the battery holding base portion 16. The hinge 18 with its generally cylindrical portion 34 and two spaced apart retention ends 36 is shown, along with the electrical engagement 14 moved into the space 38 where it is protected from possible damage when not in use.

FIG. 6 is a block view showing various major elements of the circuitry 60 of the portable phone holder and charger 10. A USB plug or other recharger input for the phone holder and charger 42 connects to a battery charger 64 and a CPU/Controller 66. The battery charger 64 is connected to a battery 68 and the CPU/Controller 66. The battery 68 is preferably and quickly charging and high capacity battery, e.g., a lithium-ion polymer battery. If the battery 68 is of different voltage than the voltage coming in through the USB plug 42, a voltage regulator 72 will change the output voltage that is fed to a phone connector jack (electrical engagement) 14 that engages with the cellular phone 30. Battery state indicator lights 46 and a recharge indicator light 48, such as LED lights 46, are controlled by the CPU/Controller 66 and indicate to a user the charge of the battery 68 and whether the connected cellular phone 30 is being charged. An on/off switch 40 allows the circuitry to be activated.

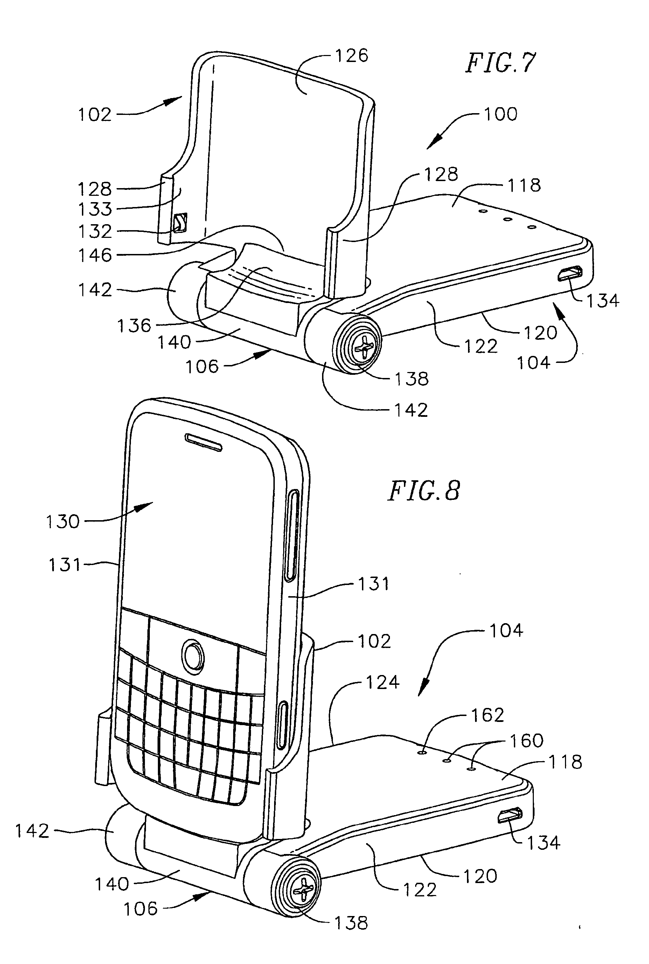

Turning now to FIGS. 7-21, there are shown various views of another embodiment of the invention, wherein a hinge between the cellular phone cradle portion and the battery holding base portion includes a quick release feature to permit these two portions to be quickly and easily separated and then reconnected.

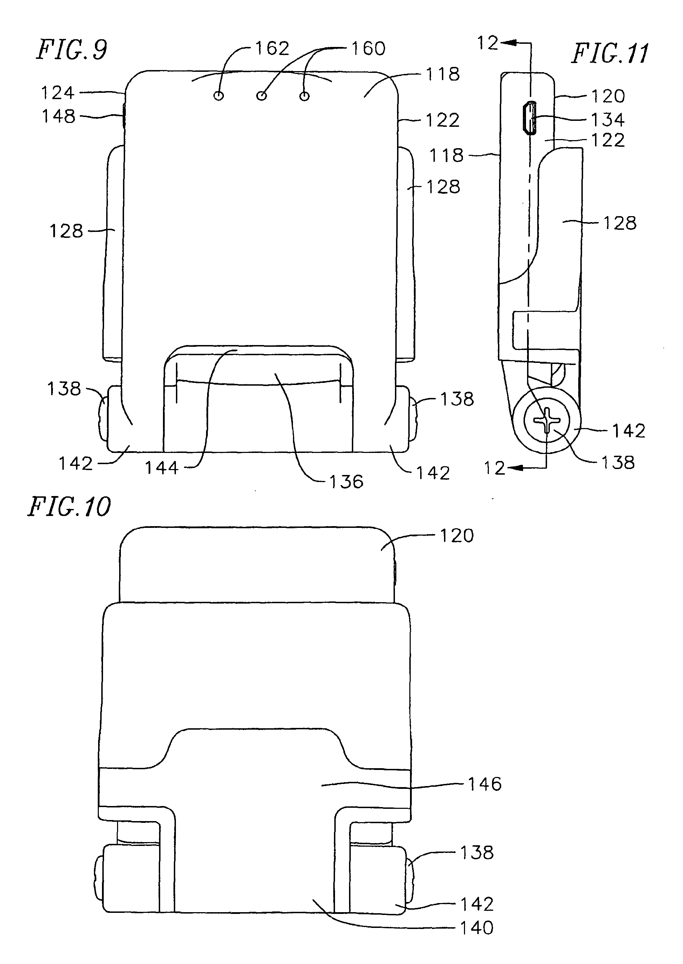

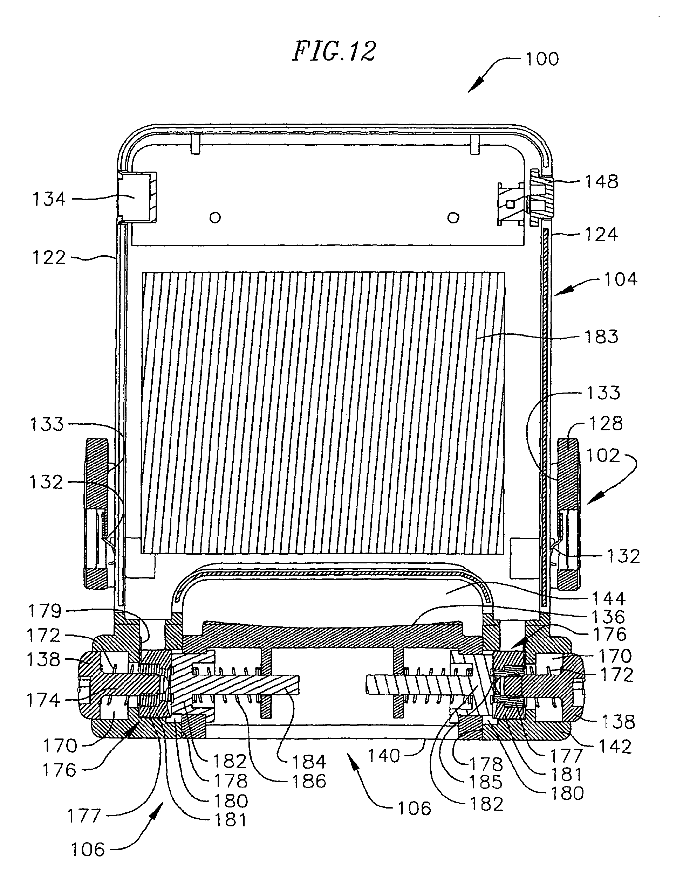

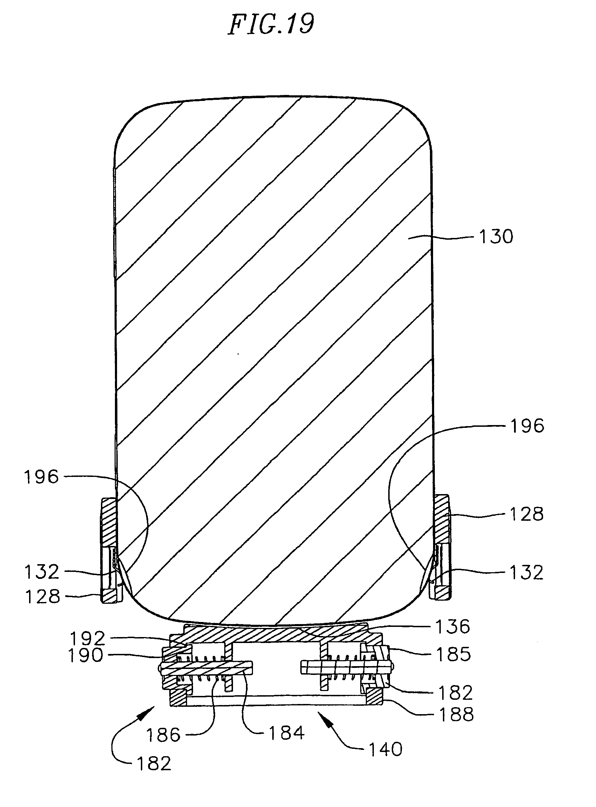

FIG. 7 is a front right perspective view of an exemplary embodiment of a portable phone holder and charger with quick release feature 100 in its opened position and FIG. 8 is the same view, but holding an exemplary cellular phone 130. The exemplary embodiment of the portable phone holder and charger with quick release feature 100 includes a cellular phone cradle portion 102 and a battery holding base portion 104 that detachably connect together through a quick release hinge 106. The battery holding base portion 104 holds a battery and circuitry (such as shown in FIG. 6), which powers up and recharges the portable electronic device connected thereto. The quick release hinge 106 pivotally and releasably connects together the battery holding base portion 104 and the cellular phone cradle portion 102 together, and allows these portions to be moved relative to each other between from the opened position shown in FIGS. 7-9, to a closed position, as best shown in FIGS. 9-12. The battery holding base portion 104 has a top 118 face, a bottom face 120, sides 122 and 124. The cellular phone cradle portion 102 has a back support 126 and two sides 128. The cellular phone cradle portion 102 has a neck portion 146 that has a barrel portion 140 at its lower end. The sides 128 have electrical contacts in the form of spring clips 132 positioned therein that protrude from the inner surface 133 of the sides 128. These spring clips 132 aid in retaining a cellular phone cradled in the cellular phone cradle portion 102 and also will make electrical contact with power connectors 196 located at opposite sides edges of the cellular phone 130, as best shown in FIG. 19. On the right hand side 122, a power inlet plug 134 is provided through which a battery 183 in the battery holding base portion 104 can itself be recharged (see FIG. 12). Unlike the first embodiment shown in FIGS. 1-5, there is not a power plug in the hinge. A base 136 is located at a bottom of the cradle portion 102 which is adapted to seat a bottom of the cellular phone 130. The sides 128 are contoured so that control buttons and/or plugs on the side of the cellular phone 130 are unobstructed. The sides 128 are also sized and shaped to guide in and securely hold the cellular phone to be cradled in the cellular phone cradle portion 102. The sides 128 can preferably be curved inwardly towards each other to frictionally fit along sides of the cellular phone. The hinge 106 includes push buttons 138. Battery state indicator lights 160 (to indicate the charge level of the battery in the portable phone holder and charger 100) can be provided on the top surface 118 of the battery holding base portion 104. In addition, a recharge indicator light 162 can be included (e.g., in a different color than the color of the battery state indicator light 160) to indicate to a user that a connected cellular phone is being recharged.

As shown in FIGS. 9-12, when the cellular phone cradle portion 102 and the battery holding base portion 104 are folded together, the sides 128 of the cradle portion 102 will engage with sides 122 and 124 of the battery holding base portion 104 to reduce the size of the unit, and the bottom face 120 of the battery holding base portion 104 will be adjacent to the back support 126 of the cradle portion 102.

The hinge 106 can conveniently comprise the barrel portion 140 of the cellular phone cradle portion 102, and two spaced apart retention ends 142 of the battery holder portion 104,which pivotally and releasably receive the barrel portion 140 therebetween, with the barrel portion 140 and the retention ends 142 comprising parts of the hinge 106. The hinge 106 can preferably include click stop means that will permit the phone cradle portion 102 and the battery holding base portion 104 to be moved between different degrees of pivot with respect to each other. Such click stop means can be provided by spring loading the hinge with a plurality of stop positions, wherein a slight force is required to move the cradle portion 102 and the battery holding base portion 104 out of stop positions. The two spaced apart retention ends 142 extend outwardly from the battery holding base portion 104 and leave a space 144 therebetween, as best shown in FIGS. 9 and 12. When the cellular phone cradle portion 102 is pivoted with respect to the battery holding base portion 104, the base 136 moves with the cellular phone cradle portion 102 and moves into the space 144. The space 144 is adapted to allow the base 136 to move into the space 144 when the cellular phone cradle portion 102 and the battery holding base portion 104 are brought into their closed orientation, as shown in FIG. 10. The cradle portion 102 has a neck region 146 that merges into the barrel portion 140. An on/off switch 148 is positioned on the left side edge 124.

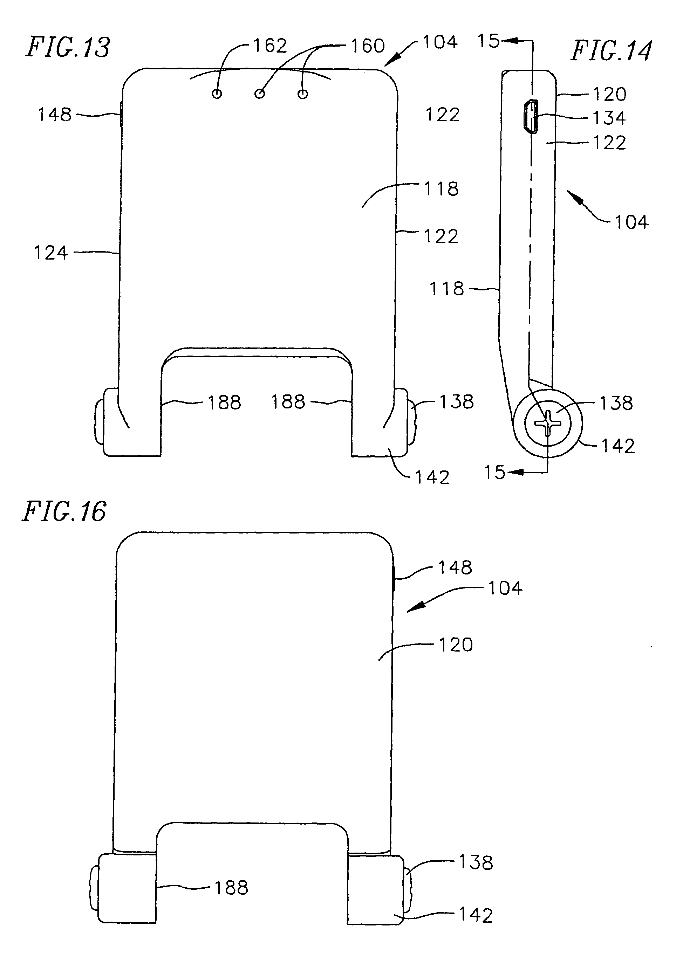

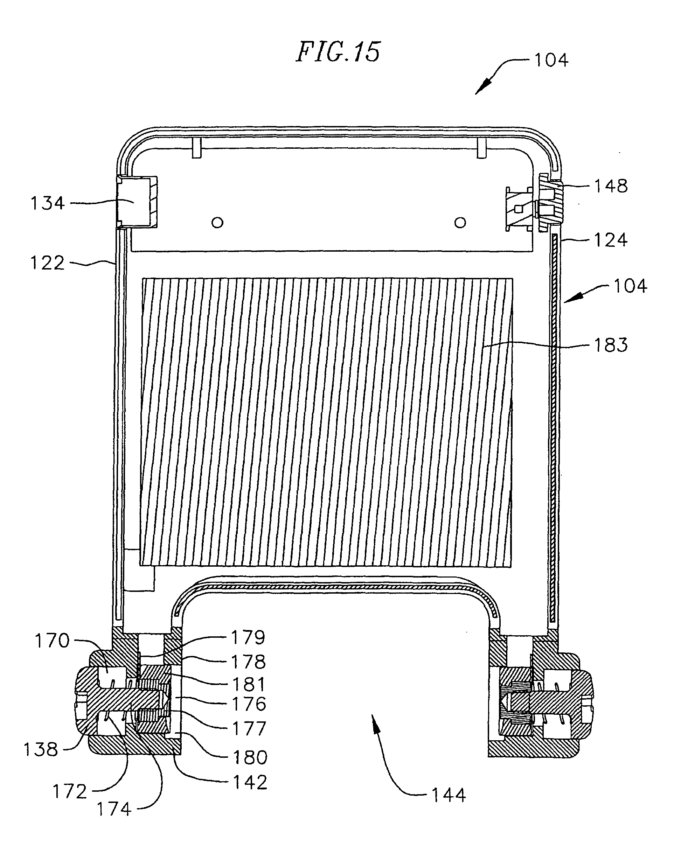

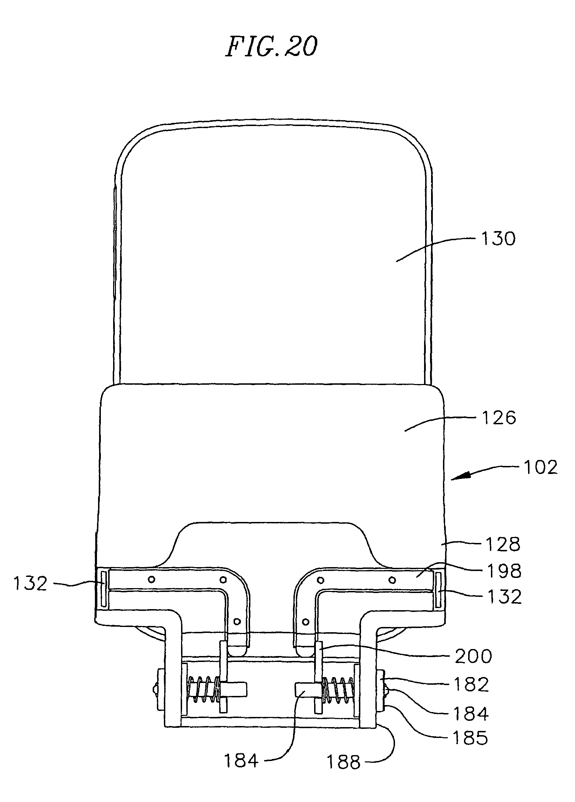

FIG. 12 is an exposed view of the portable phone holder and charger with quick release feature 100 along view lines 12-12 of FIG. 11. The quick release hinge 106 and its components are shown in this view. Each push button 138 slides in an opening 170 in the retention ends 142 and are biased out of the opening 170 in the retention ends 142 by a spring 172. The push buttons 138 have a shaft 174 which connect to an engagement end 176. Each engagement end 176 can comprise a conductive portion 177 that extends to the front of the engagement end 176. A lead 179, which is part of or connected to the conductive portion 177, is in turn electrically connected to the battery 183 in the battery holding base portion 104. If desired, a nonconductive ring 181 can partially surround the conductive portion 177. When the push buttons 138 are not pushed, the engagement ends 176 are fully retained in the opening and do not extend beyond inner walls 178 of the retention ends 142, and in fact, leave remaining space 180 inwardly of the inner walls 178. These features are also shown in FIG. 15, which is an exposed view of the battery holding base portion 104 along view lines 15-15 of FIG. 14. Located in the barrel portion 140 of the cradle portion 102 are protruding seats 182 which have a outer face 185 which contact the engagement ends 176 of the push buttons 138. The protruding seats 182 have a shaft 184 and a coil spring 186 that bias the protruding seats 182 beyond the terminal ends 188 of the barrel portion 140 and into the remaining space 180 in the retention ends 142, thereby rotatably connecting the cradle portion 102 and the battery holding base portion 104 together. In order to establish electrical flow from a connected conductive portion 177 of the engagement end 176, either the entire protruding seat 178 or at least some part thereof (e.g., the shaft 184 which can extend all the way to the end of the protruding seat which makes contact with the conductive portion 177) is made of conductive material such a copper, brass, bronze, silver, gold, etc. Further details as to how power is routed from the battery 183 in the phone holder and charger 100 to the attached cell phone is further described below with reference to FIGS. 19 and 20. When a user wishes to detach the cradle portion 102 and the battery holding base portion 104, the push buttons 138 will be depressed, which moves the engagement ends 176 and pushes on the spring loaded protruding seats 182 to push them back into the barrel portion 140 so that the cradle portion 102 and the battery holding base portion 104 can be separated. A stop 190 on the protruding seat 182 impinges on a rim 192 inside a channel 194 and prevents the protruding seats 182 from be completed ejected from the channel 194 in the barrel portion 140. The quick release hinge 106 can preferably include click stop means that will permit the phone cradle portion 102 and the battery holding base portion 104 to be moved between different degrees of pivot with respect to each other, much as is shown in FIG. 3 of the embodiment shown in FIGS. 1-5. Such click stop means can be provided by spring loading the hinge with a plurality of stop positions, wherein a slight force is required to move the cradle portion 102 and the battery holding base portion 104 out of stop positions. The on/off switch 148 is positioned on the left side edge 124 and the power inlet plug 134 is located on the right side edge 122.

FIG. 13 is a top plan view of the battery holding base portion 104 of the portable phone holder and charger. The battery state indicator lights 160 and recharge light 162 are shown, as are the top face 118, side edges 122, push buttons 138 of the quick release feature, retention ends 142, and terminal ends 188 of the retention ends.

FIG. 14 is a side view of the battery holding base portion 104. The front face 118 and bottom face 120, side 122, the power inlet plug 134 on side 122 are shown, along with the retention end 142 and push button 138.

FIG. 15 is an exposed view of the battery holding base portion 104 along view lines 15-15 of FIG. 14. The power inlet, on/off switch 148 and battery 183 are shown, as details of quick release feature in battery holding base portion 104. As shown, each push button 138 slides in an opening 170 in the retention ends 142 and are biased out of the opening 170 in the retention ends 142 by a spring 172. The push buttons 138 have a shaft 174 which connect to an engagement end 176. Each engagement end 176 can comprise a conductive portion 177 that extends to the front of the engagement end 176. A lead 179, which is part of or connected to the conductive portion 177, is in turn connected to the battery 183 in the battery holding base portion 104. If desired, a nonconductive ring 181 can partially surround the conductive portion 177. If desired, a nonconductive ring 181 can partially surround the conductive portion 177 so long as a conductive end of the conductive portion 177 is open for contact. When the push buttons 138 are not pushed, the engagement ends 176 are fully retained in the opening and do not extend beyond inner walls 178 of the retention ends 142, and in fact, leave remaining space 180 inwardly of the inner walls 178. The terminal ends 188 of the retention ends 142 are spaced apart by the space 144. The power inlet plug 134 on side 122 and on/off switch 148 on side 124 are also shown.

FIG. 16 bottom plan view of the battery holding base portion 104. Its major features are shown as previously described, including it bottom face 120, on/off switch 148, and push buttons 138 extending from the retention ends 142. The terminal ends 188 of the retention ends 142 are spaced apart by the space 144.

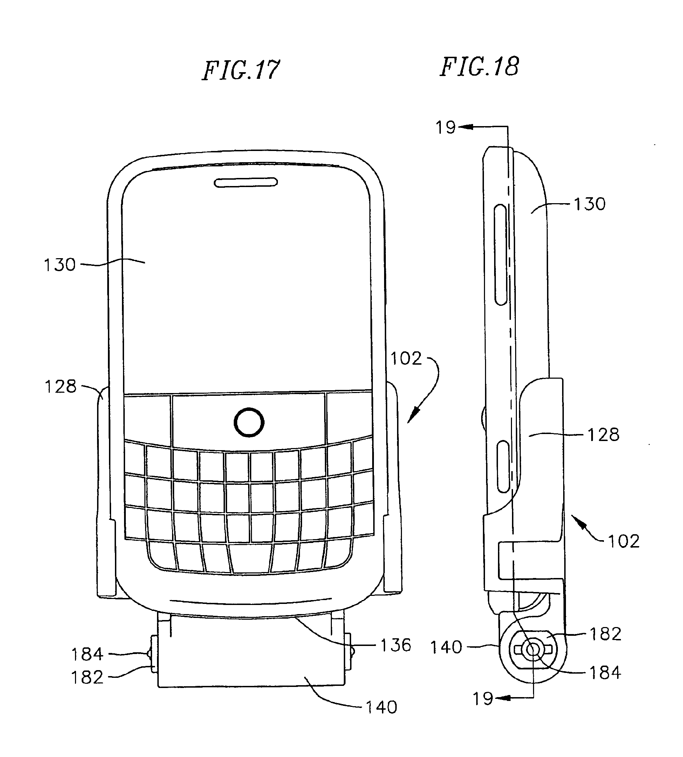

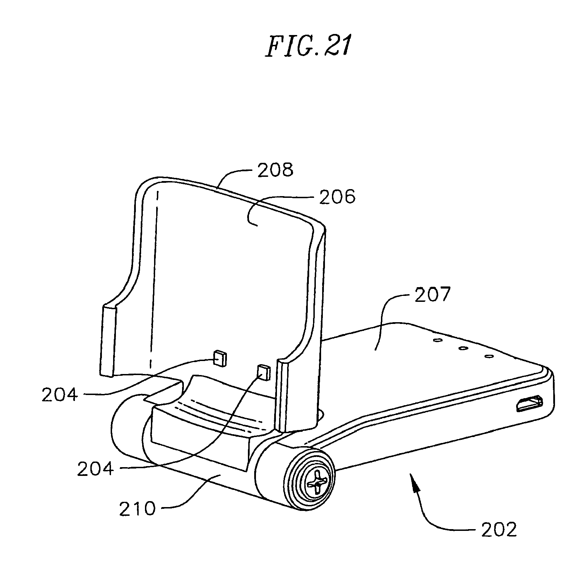

FIG. 17 is a top view and FIG. 18 is a side view showing the cellular phone cradle portion 102 of the portable phone holder and charger 100 with quick release feature with an exemplary cellular phone 130 cradled therein. The protruding seats 182 and its shaft 184 are shown protruding from the barrel portion 140 of the phone cradle portion 102. The cellular phone 130 sits on the base 136, which helps support the cellular phone 130. This embodiment of cellular phone holder and recharger 100 is designed to hold a cellular phone 130 that has power connectors 196 on sides 198 of the side 131 of the cellular phone. As noted above, if desired, a series of different cradle portions 102 can be provided to accommodate a series of different cellular phone models, e.g. and can vary in terms of the dimensions and shape of the back portion of the cradle portion. Moreover, in lieu of providing the spring clips 132 on inside edges 133 of the sides 128 (as shown in FIGS. 76, 12, and 19), electrical recharging contacts can be provided on other parts of the cradle portion 102, e.g., on the back of the cradle portion, as best shown in FIG. 21.

FIG. 19 is a partially exposed front view of the cellular phone cradle portion holding an exemplary cellular phone along view lines 19-19 of FIG. 18, and FIG. 20 is a partially exposed rear view of the cellular phone cradle portion 102 holding an exemplary cellular phone 130. The spring clips 32 protruding from the sides 128 will thus make electrical contact with the cellular phone and power can be routed from the cellular phone holder and recharger 100 to the cellular phone to recharge the cellular phone. Located in the barrel portion 140 of the cradle portion 102 are protruding seats 182 which have a outer face 185 which contact the engagement ends 176 of the push buttons 138. The protruding seats 182 have a shaft 184 and a coil spring 186 that bias the protruding seats 182 beyond the terminal ends 188 of the barrel portion 140 and into the remaining space 180 in the retention ends 142 (as best shown in FIG. 12), thereby rotatably connecting the cradle portion 102 and the battery holding base portion 104 together. In order to establish electrical flow from a connected conductive portion 177 of the engagement end 176 (as shown in FIGS. 12 and 15), either the entire protruding seat 182 or at least some part thereof (e.g., the shaft 184 which can extend all the way to the end of the protruding seat which makes contact with the conductive portion 177) is made of conductive material such a copper, brass, bronze, silver, gold, etc. Located in the barrel portion 140 of the cellular phone cradle portion 102 are the protruding seats 182 which have a outer face 185 which contact the engagement ends 176 on the push buttons 138. The have a shaft 184 and a coil spring 186 that bias the protruding seats 182 beyond the terminal ends 188 of the barrel portion 140 and into the remaining space 180 in the retention ends 142, thereby rotatably connecting the cradle portion 102 and the battery holding base portion 104 together. The electrical pathway from the spring clips 132 in the sides 128, through conductors 198 located in the back support 126 is best shown in FIG. 20. The conductors 198 connect the spring clips 132 to conducting bridges 200 which make electrical contact with the conducting shafts 184, which pass through the protruding seats 182. In order to establish electrical flow from each connected conductive portion 177 of the engagement end 176, either the entire protruding seat 182 or at least some part thereof (e.g., the shaft 184 which can extend all the way to the end of the protruding seat 182 which makes contact with the conductive portion 177) is made of conductive material such a copper, brass, bronze, silver, gold, etc. When the cellular phone cradle portion 102 is connected to the battery holding base portion 104, the two electrical, recharge pathways are completed, and power can flow from the battery to the cellular phone docked to the unit. This electrical connection is just one possible way to establish electrical connections between a cellular phone and the portable phone holder and charger 100 suitable to recharge the cellular phone.

While the spring clips 132 are shown as protruding from the inside surfaces 133 of the sides 128 of the cellular phone cradle portion 102, in some cellular phones, electrical contacts are located at different locations. For example, in some cellular phones, contacts may be located on the back of the phone as shown in FIG. 21, which is an exemplary alternate embodiment of an exemplary embodiment of a portable phone holder and charger 202 with quick release feature in its opened position with recharging contacts 204 on the back support 206 thereof. In other respects, it is like the embodiment shown in FIGS. 7-20, and provides for detachability by a hinge 210 between its battery holder portion 207 and cradle portion 208. The location of recharging contacts 204 (be they spring clips or other kinds of electrical contacts), are positioned to line up with the location of the electrical contacts on the particular cellular phone it is adapted to be used to hold and recharge.

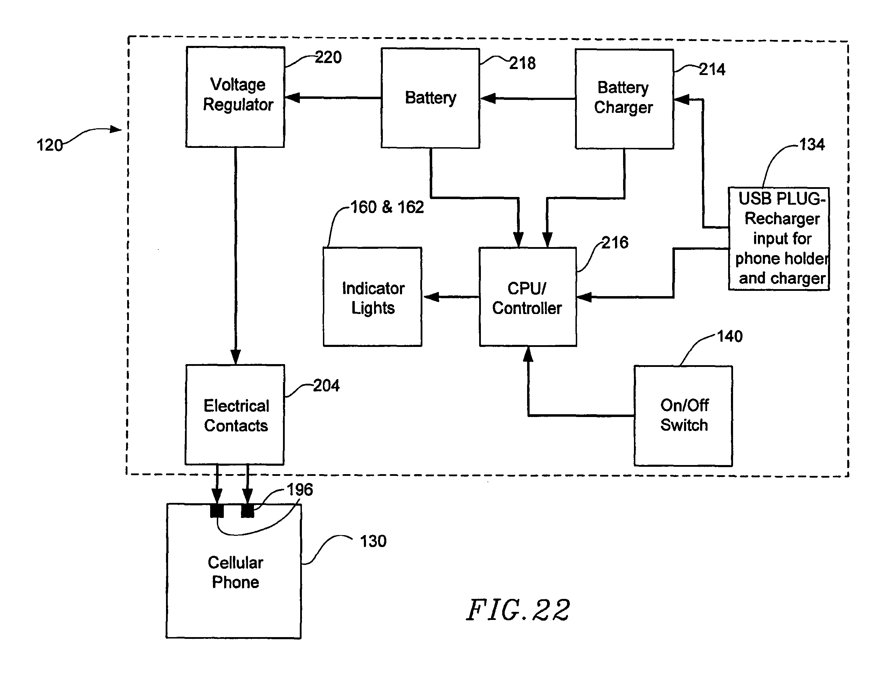

FIG. 22 is a block view showing various major elements of the circuitry 210 of the portable phone holder and charger 100. A USB plug or other recharger input for the phone holder and charger 134 connects to a battery charger 214 and a CPU/Controller 216. The battery charger 214 is connected to a battery 218 and the CPU/Controller 216. The battery 218 is preferably and quickly charging and high capacity battery, e.g., a lithium-ion polymer battery. If the battery 218 is of different voltage than the voltage coming in through the USB plug 134, a voltage regulator 220 will change the output voltage that is fed to electrical contacts 134 of the cradle portion, which will make electrical contact with power connectors 196 located at opposite sides edges of the cellular phone 130 (see FIG. 19), or on other parts of the cellular phone. The battery state indicator lights 160 and a recharge indicator light 162, such as LED lights, are controlled by the CPU/Controller 216 and indicate to a user the charge of the battery 218 and whether the connected cellular phone 130 is being charged. The on/off switch 148 allows the circuitry to be activated.

While the portable phone holder and charger 10 and 100 of the invention has been described herein for use with a "portable phone" or "cellular phone", it can be used with a wide variety of portable handheld devices such as cellular phone, personal digital assistance, wireless internet devices, and the like that need to be recharged. Also, while the embodiment of FIGS. 1-5 charges the engaged cellular phone 30 via an electrical engagement 14 in the form of a jack, the embodiment without a quick release feature, can use be modified to recharged an engaged cellular phone 14 via electrical contacts on the side or back of cellular phone as is accomplished in the embodiment of FIGS. 7-21. Or, if desired, the quick release feature of the embodiment of FIGS. 7-20 can incorporate an electrical engagement 14 in the form of a jack instead of providing electrical contacts on sides or the pack of the phone cradle portion.

Having thus described exemplary embodiments of the present invention, it should be understood by those skilled in the art that the above disclosures are exemplary only and that various other alternatives, adaptations and modifications may be made within the scope of the present invention. The presently disclosed embodiments are to be considered in all respects as illustrative and not restrictive.

## Claims

1. A portable electronic device holder and charger with quick release feature (100, 202) for holding and charging a portable electronic device (130), **characterized by**:
a cradle portion (102, 208) with electrical contacts (132, 204) adapted to contact with electrical recharging contacts (196) on a portable electronic device (130) engaged therewith;
a battery holding base portion (104, 207); and
a hinge (106, 210) that pivotally and releasably connects together the cradle portion (102, 206) and the battery holding base portion (104, 207).

2. The portable electronic device holder and charger (100, 202) of claim 1, **characterized by** the hinge (106, 206) comprising two spaced apart retention ends (142) of the battery holding base portion (104, 207) defining a space (144) therebetween, a push button (138) located in each retention end (142), and an extension (146) of the cradle portion (102, 208) comprising a barrel portion (140), which barrel portion (140) extension is pivotally and releasably positioned between the two spaced apart retention ends (142) and has protruding seats (182) which releasably engage with the push buttons (138) and provide for electrical connectivity between the battery holding base portion (104, 207) and the cradle portion (102, 208) through the hinge (106, 210).

3. The portable electronic device holder and charger (100, 202) of claim 2, **characterized by** the push buttons (138) being spring loaded (172) in the retention ends (142) and are adapted to move from a first, unpushed position wherein the push buttons (138) do not extend beyond inside edges (178) of the spaced apart retention ends (142), to a second, pushed position, wherein the push buttons (138) extend beyond inside edges (178) of the spaced apart retention ends (142), and wherein the protruding seats (182) are spring loaded (186) and protrude from opposing sides (188) of the barrel portion (140), and when the push buttons (138) are not pushed, the protruding seats (182) engage with the push button (138) and are retained in the retention ends (142), but when the push buttons (138) are pushed, will move the protruding seats (182) out of the retention ends (142) and back into the barrel portion (140) so that the cradle portion (102, 208) and the battery holding base portion (104, 207) can be separated.

4. The portable electronic device holder and charger (100, 202) of claim 3, **characterized by** the push buttons (138) at least partially comprising conductive material and the protruding seats (182) at least partially comprise conductive material.

5. The portable electronic device holder and charger (100, 202) of claim 1, 2, 3, or 4, **characterized by** the hinge (106, 210) providing click stops at a plurality of positions of pivoting of the cradle portion (102, 208) relative to the base portion(104, 207).

6. The portable electronic device holder and charger (100, 202) of claim 1, 2, 3, 4, or 5, **characterized by** the cradle portion (102, 208) comprising a back support (126, 206) and two side projections (128), which side projections (128) are adapted to engage with sides (122) of the base portion (104, 207) when the portable phone holder and charger (100, 202) is in a closed orientation, and which cradle portion (102, 208) holds the portable electronic device (130) when it is used to recharge the portable electronic device (130).

7. The portable electronic device holder and charger (100, 202) of claim 1, 2, 3, 4, 5, or 6, **characterized by** a battery and recharging electronic circuitry (120) being located in the base portion (104, 207), and wherein the battery and recharging electronic circuitry (120) is adapted to permit the portable electronic device (130) to be used and recharged while connected to the portable phone holder and charger (100, 202).

8. The portable electronic device holder and charger (100, 202) of claim 7, **characterized by** the battery and recharging electronic circuitry (120) including an input plug (134) for powering and recharging the portable phone holder and charger (100, 202), a battery charger (214), a battery (218), a controller (216), status indicator lights (160, 162), an on/off switch (140), a voltage regulator (220), and an output (134) for connecting to the electrical contacts (134, 204) on the phone cradle portion (102, 208).
